# EUROPEAN PATENT APPLICATION

(11) **EP 4 583 009 A1**
(43) Date of publication of application: **09.07.2025**
(21) Application number: 24150396.0
(22) Date of filing: 04.01.2024
(51) Int. Cl.: G06N 5/022

(54) **COMPUTER IMPLEMENTED METHOD FOR GENERATING A KNOWLEDGE GRAPH MODEL IN A MEDICAL ENVIRONMENT**

(71) Applicant: Koninklijke Philips N.V., 5656 AG Eindhoven (NL)
(72) Inventor: JAIN, Anshul, Eindhoven (NL); PAWAR, Shreeyash Sanjay, Eindhoven (NL); GOOSSENS, Joël Arnoldus Josephus, 5656AG Eindhoven (NL); BUCUR, Anca Ioana Daniela, Eindhoven (NL)
(74) Representative: Philips Intellectual Property & Standards

(57) **Abstract**

Computer implemented method for generating a central knowledge graph model (10) in an medical environment, comprising the steps of: providing a first base knowledge graph model and a second base knowledge graph model (S10); training the first base knowledge graph model with a first data set in a first site (15) of the medical environment (S20); training the second base knowledge graph model with a second data set in a second site (16) of the medical environment (S30); transferring the trained first base knowledge graph model (13) and the trained second base knowledge graph model (14) to a central aggregator (11) (S40); aggregating by the central aggregator (11) the trained first base knowledge graph model (13) and the trained second knowledge graph model (14) to a central knowledge graph model (10) (S50); providing the central knowledge graph model (10) for further use (S60).

## Description

### FIELD OF THE INVENTION

The invention relates to a computer implemented method for generating a knowledge graph model in a medical environment, to a device, a computer program and to a computer readable medium.

### BACKGROUND OF THE INVENTION

A knowledge graph is a graph of data intended to accumulate and convey knowledge of the real world, whose nodes represent entities of interest and whose edges represent relations between these entities. Knowledge graphs are often assembled from numerous sources, and as a result, can be highly diverse in terms of structure and granularity. A major challenge in medical knowledge graphs has been the acquisition of data sources to create such knowledge graphs. Examples of causes include privacy concerns and commercial competition which data to exist in an isolated manner, giving rise to challenges on centrally training models.

It has now become apparent that there is a further need to provide a method for generating a knowledge graph model in a medical environment.

### SUMMARY OF THE INVENTION

In view of the above, it is an object of the present invention to provide a method that allows for improving of generating a knowledge graph model in a medical environment.

These and other objects, which become apparent upon reading the following description, are solved by the subject matter of the independent claims. The invention provides a method, a device and a computer program. The dependent claims refer to preferred embodiments of the invention.

A first aspect of the present disclosure relates to a computer implemented method for generating a central knowledge graph model in a medical environment, comprising the steps of:
providing a first base knowledge graph model and a second base knowledge graph model;
training the first base knowledge graph model with a first data set in a first site of the medical environment;
training the second base knowledge graph model with a second data set in a second site of the medical environment;
transferring the trained first base knowledge graph model and the trained second base knowledge graph model to a central aggregator;
aggregating by the central aggregator the trained first base knowledge graph model and the trained second knowledge graph model to the central knowledge graph model;
providing the central knowledge graph model for further use.

The term knowledge graph model, as used herein is to be understood broadly and may relate to a graph of data that accumulates and conveys knowledge of the real world. The knowledge graph comprises a node and edges. The node may represent an entity of interest. The edge may represent the relation between these nodes (i.e. entities). A node may be for example a hospital. The node may comprise a plurality of attributes linked together, such as a medical equipment, a patient note, a picture archiving and communication system (pacs). The edge may be the relation between such an attributes of different nodes.

The term central knowledge graph model, as used herein, is to be understood broadly and may relate to a knowledge graph model that is assembled from different single knowledge graph models.

The term medical environment, as used herein, is to be understood broadly and may relate to any site/entity, which engages with health care issues. The site may relate to a hospital, a university and/or a research institution.

The term base knowledge graph model, as used herein, is to be understood broadly and may relate to an initial knowledge graph model that serves as basis for a training with a respective data set in a site.

The data set may be received from an electronic health records (EHR) system.

The term trained knowledge graph model, as used herein is to be understood broadly may relate to a knowledge graph model that has been trained with a data set from a site.

The term central aggregator, as used herein, is to be understood broadly and may relate to a software module configured to aggregate different knowledge graph models to a central knowledge graph model. The central aggregator may be hosted on a server that is in data exchange with the respective sites.

The term aggregating, as used herein, is to be understood broadly may relate to establish links between different knowledge graphs based on shared attributes or semantics. The attribute may be for example patient age or patient gender.

The invention is based on the finding that methods by which knowledge graphs can be created and subsequently enriched from diverse sources of data that may range from plain text to structured formats. The appropriate methodology to follow when creating a knowledge graph depends on the actors involved, the domain, the envisaged applications, and the available data sources. With the flexibility offered by knowledge graphs you can start with an initial core that can be incrementally enriched from other sources as and when required. This sets up issue of data spill over between sources which the actors involved in process may not agree with. The problem may be even aggregated in medical environments. The invention proposes to create single knowledge graph models in respective sites and to merge the different knowledge graphs to a central knowledge graph. The method may apply concepts of federated learning. However, only the single knowledge graph models are shared with others not the data sets used to train the knowledge graph models. The respective data sets remain in the respective sites and are therefore safe in terms of data security. The so created central knowledge graph model is then provided for further use. The further use may comprise knowledge graph aided patient diagnosis systems.

In other words, Federated Learning (FL) traditionally has been used for training models by fetching data from multiple workers and updating weights. Knowledge graph creation is an arduous task that involves significant steps such as data sourcing, ontology mapping, entity linking etc. In our proposed method, we package the creation pipeline to worker sites, which process local datasets to create multiple local "named graphs" with unique ID's, which can be referenced by "Default graph" present at central host, containing metadata of these named graphs, to give a "Graph Dataset". Each named graph will be treated as node, with edges forming link between documents, creating chain of linked data. This helps in easier merging of graph data later, tracking the source of data, easy querying of linked data models for lineage, makes easier to update or refine data from single source, distinguishing trustworthy sources, diagnosing data quality from each source.

A knowledge graph is a graph of data intended to accumulate and convey knowledge of the real world, whose nodes represent entities of interest and whose edges represent relations between these entities.

Employing a graph-based abstraction of knowledge may have numerous benefits in such settings when compared with a relational model or NoSQL alternatives, like able to leverage relationships between rows, much fast querying times due to associations etc. Such knowledge may be accumulated from external sources or extracted from the knowledge graph itself.

Knowledge graphs may often be assembled from numerous sources, and as a result, can be highly diverse in terms of structure and granularity. A major challenge in medical knowledge graphs has been the acquisition of data sources to create such knowledge graphs. Examples of causes include privacy concerns and commercial competition which data to exist in an isolated manner, giving rise to challenges on centrally training models.

Federated Learning is a machine learning technique that trains a machine learning algorithm across multiple decentralized devices/sites/servers holding local data sets without actually exchanging the data set. This is unlike traditional centralized machine learning where all data sets are available on a single server. Existing medical data is not fully exploited by machine learning primarily because it sits in data silos and privacy concerns restrict access to this data.

Federated learning may be a promising solution for creating, updating, training knowledge graphs over isolated graph data. Federated learning may allow to utilize isolated data while keeping them safe and local.

Methods by which knowledge graphs can be created and subsequently enriched from diverse sources of data that may range from plain text to structured formats. The appropriate methodology to follow when creating a knowledge graph may depend on the actors involved, the domain, the envisaged applications, and the available data sources. With the flexibility offered by knowledge graphs we can start with an initial core that can be incrementally enriched from other sources as and when required. This may set up an issue of data spill over between sources which the actors involved in process may not agree with. This issue may be aggravated in data sensitive domains such as in medical. Therefore, utilizing the complementary capabilities of different related knowledge graphs while maintaining data privacy may be an urgent problem in real-world knowledge graph (i.e. KG) applications.

Also the typical size of enterprise grade KG's can be several GB's to create models and perform tasks such as Knowledge Graph Completion (taking example of open source KG's such as YAGO, Wikidata that are around 500'GB worth of data). Hence it may make sense to use distributed learning for KG tasks.

Learning from EHRs may provide the load opportunity to discover new relationships that were previously unrecognized, such as new patterns for disease profile, alternate medication paths etc. Additionally, we can learn specialized graphs with different granularity for different specialties or settings by simply learning models from the records of patients from that setting. To ensure such granularity in the graph, it may be important to ensure the graphs between sources are segregated and kept isolated. Also learning a graph of candidate relations involving diseases and symptoms from EMRs may be the first step toward learning models that perform diagnostic inference directly from the real data that is continuously being generated from the healthcare system. Since the patient data from a single hospital may not be representative of the entire population, due to various regional biases, this may lead to predictions which are not generalizable. To remedy this, the idea may be to employ a FL based framework that would create client graphs in hospitals, which would aggregate throughout iterative exchange of model parameters to a central aggregator. As only the model parameters are shared, the raw data (e.g. patient data) remains within hospitals which ensuring patient privacy.

In an embodiment, the trained first base knowledge graph model and the trained second base knowledge graph model may each comprise a parameter and a weight. The trained knowledge graph models comprise parameters for nodes and edges indicative of attributes and relations. The term weight, as used herein, may relate to weighting of nodes the respective trained knowledge graph model. The weight may consider the representation of the underlying data set used to train the base knowledge graph. This may increase the robustness of the central knowledge graph model.

In an embodiment, the first data set in the first site may be isolated from an exchange with an environment and the second data set in the second site may be isolated from an exchange with an environment and wherein the first site may be different from the second site. The data sets in the respective sites may not be shared with other sites or with the central aggregator. Merely, the parameterized trained knowledge graphs are shared. This may increase the data security.

In an embodiment, each of the trained first base knowledge graph model and the trained second base knowledge graph model may comprise a unique identification. The may create for each of the trained model a unique identification. The unique identification (i.e. unique ID) may help to easier aggregate different trained knowledge graph models with their parameters and weights. This may be simplify tracking the source of data, querying of linked data models for lineage, updating or refining data from single sources, distinguishing trustworthy sources, diagnosing data quality from each source.

In an embodiment, the central knowledge graph model may comprise a plurality of nodes and a plurality of edges. The node may comprise a plurality of attributes and links between the attributes. The edge may be a relation between the two nodes. The edge may relate to a common attribute in two nodes. An attribute may be for example patient age. In other words, the central knowledge graph model is aggregated from at least two trained knowledge graph models. The edge may relate to a relation between two nodes.

In an embodiment, the first base knowledge graph model and the second base knowledge graph model may comprise each at least one node and at least one edge.

In an embodiment, the training of the first knowledge graph model and the second knowledge graph model may comprise an ontology creation. The term ontology creation, as used herein, is to be understood broadly and may relate to defining a structured representation of entities, their relation and attributes within a specific domain. This may advantageously serve as framework for organizing information. The ontology creation may comprise one more of the following: defining a purpose and a scope of a knowledge graph, identifying attributes and relations, and establishing hierarchies. It
In an embodiment, the training of the first knowledge graph model and the second knowledge graph model may comprise a transformation of the first data set and the second data set. The term transformation, as used herein, is to be understood broadly and may relate to a modification of a structure, a content or representation of a knowledge graph model based on the respective data set.

In an embodiment, the training of the first knowledge graph model and the second knowledge graph model may comprise a transformation of the respective basis knowledge graph model.

In an embodiment, the training of the first knowledge graph model and the second knowledge graph model may comprise a schema definition. The term schema definition, as used herein, is to be understood broadly and may relate to definition of a structure and organization of a knowledge graph, specifying types of entities, their entities, their attributes, and relations between them. This may help to ensure consistency and clarity in how information is stored and retrieved within the knowledge graph.

In an embodiment, the first data set and/or the second data set may comprise one or more of the following: age, gender, disease, admission identification, reason, drug, dosage and/or machine data.

In an embodiment, the first data set and/or the second data set may comprise a plain text and/or a structured format and/or wherein the first data set and/or the second data set may be received from an electronic health record system.

In an embodiment, the further use may comprise one or more of the following: controlling a medical machine, input for a patient diagnosis system. The medical machine may be an imaging device.

A further aspect of the disclosure relates to a device comprising means for carrying out the method as described above.

A further aspect of the disclosure relates to a computer program comprising instructions which, when the program is executed by a computer, cause the computer to carry out the method as described above.

A last aspect of the disclosure relates to a computer readable medium comprising instructions which, when executed by a computer, cause the computer to carry out the method as described above.

The computer program might be stored on a computer unit, which might also be part of an embodiment. This computer unit may be configured to perform or induce performing of the steps of the method described above. Moreover, it may be configured to operate the components of the above-described device. The computing unit can be configured to operate automatically and/or to execute the orders of a user. A computer program may be loaded into a working memory of a data processor. The data processor may thus be equipped to carry out the method according to one of the preceding embodiments. This exemplary embodiment of the invention covers both, a computer program that right from the beginning uses the invention and computer program that by means of an update turns an existing program into a program that uses invention. Further, on, the computer program might be able to provide all necessary steps to fulfil the procedure of an exemplary embodiment of the method as described above.

According to a further exemplary embodiment of the present invention, a computer readable medium, such as a CD-ROM, USB stick or the like, is presented wherein the computer readable medium has a computer program stored on it which computer program is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems. However, the computer program may also be presented over a network like the World Wide Web and can be downloaded into the working memory of a data processor from such a network. According to a further exemplary embodiment of the present invention, a medium for making a computer program available for downloading is provided, which computer program is arranged to perform a method according to one of the previously described embodiments of the invention.

It is noted that the above embodiments may be combined with each other irrespective of the aspect involved. Accordingly, the method may be combined with structural features of the device and/or system of the other aspects and, likewise, the device and the system may be combined with features of each other, and may also be combined with features described above with regard to the method.

These and other aspects of the present invention will become apparent from and elucidated with reference to the embodiments described hereinafter.

### BRIEF DESCRIPTION OF THE DRAWINGS

Exemplary embodiments of the invention will be described in the following drawings.
Fig. 1 shows a schematic view of a method for generating a central knowledge graph model in a medical environment;
Fig. 2 shows a further schematic view of the method for generating a central knowledge graph;.
Fig. 3 shows a schematic view of a central knowledge graph model; and
Fig. 4 shows a schematic view of a use case.

### DETAILED DESCRIPTION OF EMBODIMENTS

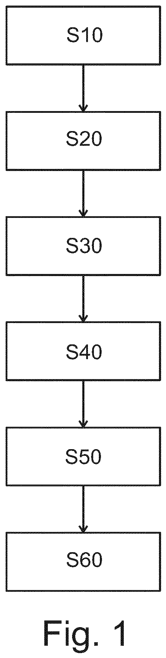

Fig. 1 shows a schematic view of a method for generating a central knowledge graph model in a medical environment.

Step S10 comprises providing a first base knowledge graph model and a second base knowledge graph model.

Step S20 comprises training the first base knowledge graph model with a first data set in a first site of the medical environment. The first site may be a hospital. The training of the base knowledge graph model may comprise an ontology creation, a transform action, and or a schema definition.

Step S30 comprises training the second base knowledge graph model with a second data set in a second site of the medical environment. The first site may be a hospital. The training of the base knowledge graph model may comprise an ontology creation, a transform action, and or a schema definition.

The training of the first and second base knowledge graph models may preferably be conducted in an automated manner, wherein the respective data sets surface input and the respective first and second trained based knowledge graph models are the output.

Step S40 transferring the trained first base knowledge graph model and the trained second base knowledge graph model to a central aggregator. The central aggregator may be hosted on our server and may have an interface to the first site and the second site. The trained first and second trained base knowledge graph models may comprise in the present example parameter weights. The first and second trained based knowledge graph models may comprise a unique ID.

Step S50 comprises aggregating by the central aggregator the trained first base knowledge graph model and the trained second knowledge graph model to a central knowledge graph model. The respective trained base knowledge graph models comprise each at least one node and at least one edge. The node may comprise one or more attributes, such as patient age. The aggregating comprises the establishing of a link between the nodes, in particular by means of shared attributes.

Step S60 comprises providing the central knowledge graph model for further use. The further use my comprise providing the central knowledge graph model to a diagnosis system.

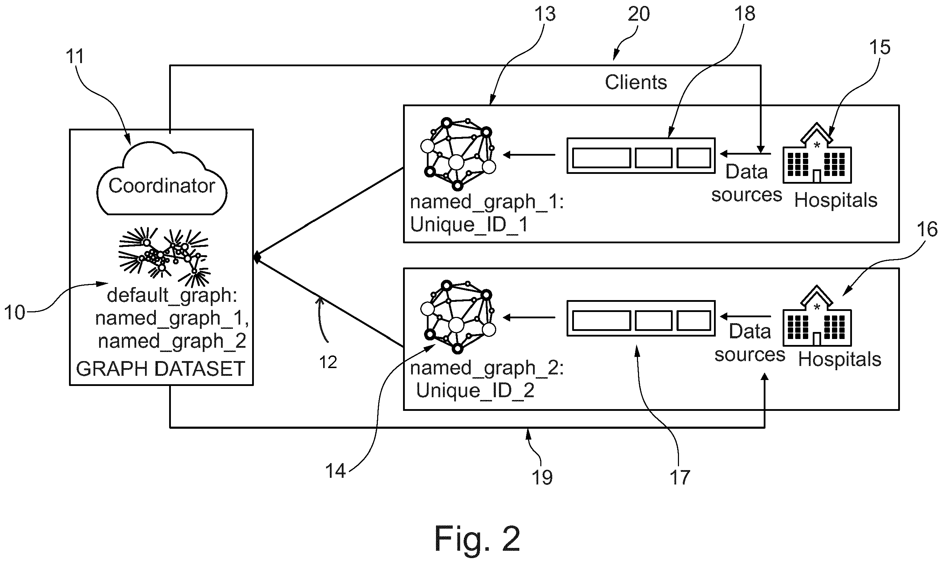

Fig. 2 shows a further schematic view of the method for generating a central knowledge graph model.

In the present example, there are two different sites 15 and 16, which are in the present example each hospitals. The sites 15 and 16 receiving the present example from the central aggregator each base knowledge graph models by means of inputs 19 and 20. The respective sites 15 and 16 provide each respective data sets that are used to train the respective base knowledge graph models. The training is conducted automatically in the present example by so-called knowledge graph pipelines 17 and 18. In the knowledge graph pipelines the steps of ontology creation, transformation action and schema definition may be carried out. The knowledge graph pipelines 17 and 18 output a trained based knowledge graph model 13 and a trained based knowledge graph model 14. These trained based knowledge graph models are transferred without the underlying data sets to the central aggregator 11. The central aggregator 11 aggregates the single trained based knowledge graph models to a central knowledge graph model tent. The aggregator 11 transfers further meta data (e.g. lexicon, ontology, parameters and weights of the central knowledge graph model) to the respective sides 15 and 16. The method data may be used to improve the first and second trained base knowledge graph models. It is noted that the described can be repeated in order to improve the central knowledge graph model and the respective first and second trained based knowledge graph models.

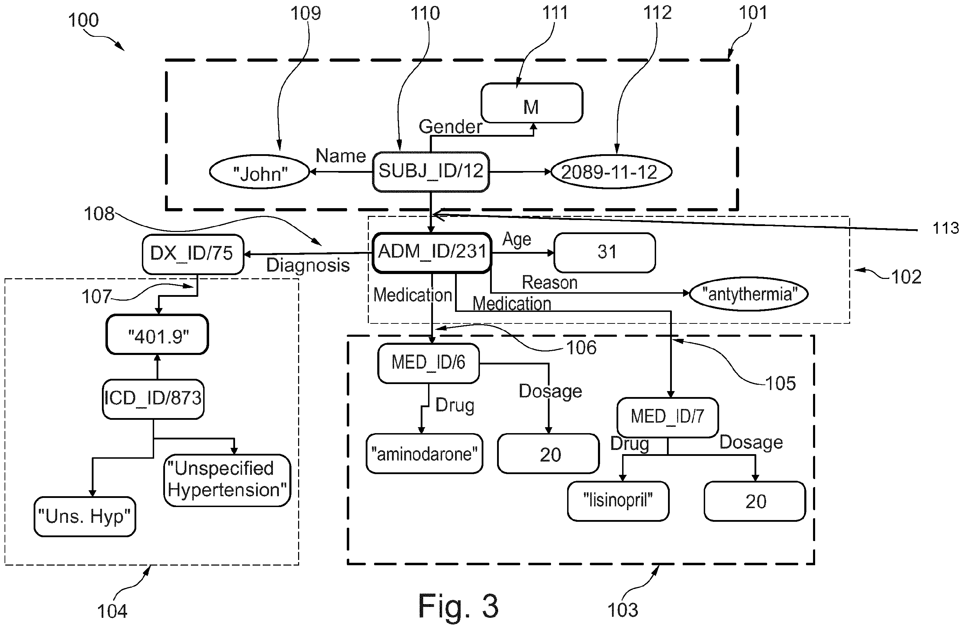

Fig. 3 shows a schematic view of a central knowledge graph model 100.

The central knowledge graph model 100 comprises in the present example for nodes 101, 102, 103, and 104. Node 101 relates in the present example to a patient database from a first site (e.g. a hospital). Node 102 relates in the present example to an admission at a second site (e.g. further hospital). Node 103 relates in the present example to a medication database at a third site (e.g. a pharmacy). Node 104 relates in the present example to a diagnosis system at a fourth site (e.g. a further hospital or for example the same hospital as by node 101). Node 101 comprises in this example attributes 109 to 112, wherein attribute 109 relates to a name off a patient, attribute 110 relates to a subject identification of a patient, attribute 111 relates to a gender off a patient, and attribute 112 relates to a date of birth of a patient. The other nodes 102, 103 and 104 each comprise a plurality of attributes. The node 101 and the node 102 are linked together by the common edge 113 that links the subject ID 110 with an admission ID of the node 102. Node 102 and node 100 and free are linked by two edges 105 and 106. Node 102 and note 104 are linked by the edges 107 and 108, wherein the edges 107 108 are linked by a further attribute, in the present case a diagnosis code.

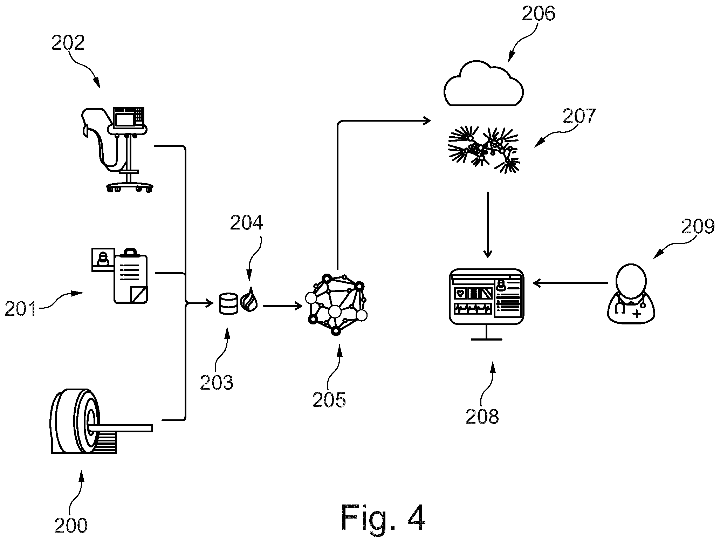

Fig. 4 shows a schematic view of a use case of the method.

When the present example there are different there three different source in a site, namely a medical equipment database 200, a patient notes database 201, and a picture archiving and communication system (pacs) 202. These databases are linked by an electronic medical record system (EMR) 203. The EMR 203 has a fast healthcare interoperability resources interface 204 that provides the data set for training the base knowledge graph model 205. The training of the base knowledge graph model is conducted as described above. The trained base knowledge graph model is provided to a central aggregator 206. The central aggregator aggregates this trained base knowledge graph model 205 and other trained base knowledge graph models (not shown) to a central knowledge graph model 207. In this manner multiple named graphs are trained together and coordinated at a server, giving a final central knowledge graph at server. The central knowledge graph model 207 or an endpoint of the central knowledge graph model 207 can be deployed in an application 208 that may help a medical supervisor 209 to get an overview of the patient and aid in better decision-makings.

### LIST OF REFERENCE SIGNS:

S10 providing a first base knowledge graph model and a second base knowledge graph model
S20 training the first base knowledge graph model with a first data set in a first site of the medical environment
S30 training the second base knowledge graph model with a second data set in a second site of the medical environment
S40 transferring the trained first base knowledge graph model and the trained second base knowledge graph model to a central aggregator
S50 aggregating by the central aggregator the trained first base knowledge graph model and the trained second knowledge graph model to an knowledge graph model
S60 providing the knowledge graph model for further use
10 knowledge graph model
11 aggregator
12 transfer of the trained knowledge graph models
13 first trained knowledge graph model
14 second trained knowledge graph model
15 first site
16 second site
17, 18 data processing
19, 20 transfer of meta data
100 knowledge graph model
101, 102, 103, 104 single trained knowledge graph models
104, 105, 107, 108, 113 edges
109, 110, 111. 112 nodes
200 medical equipment
201 patient note
202 pacs
203 EMR
204 FHIR
205 trained knowledge graph model
206 aggregator
207 knowledge graph model
208 KG aided patient diagnosis application
209 medical supervisor

## Claims

1. Computer implemented method for generating a central knowledge graph model (10) in an medical environment, comprising the steps of:
providing a first base knowledge graph model and a second base knowledge graph model (S10);
training the first base knowledge graph model with a first data set in a first site (15) of the medical environment (S20);
training the second base knowledge graph model with a second data set in a second site (16) of the medical environment (S30);
transferring the trained first base knowledge graph model (13) and the trained second base knowledge graph model (14) to a central aggregator (11) (S40);
aggregating, by the central aggregator (11), the trained first base knowledge graph model (13) and the trained second knowledge graph model (14) to a central knowledge graph model (10) (S50);
providing the central knowledge graph model (10) for further use (S60).

2. The method according to claim 1, wherein the trained first base knowledge graph model and the trained second base knowledge graph model each comprise a parameter and a weight.

3. The method according to claim 1 or 2, wherein the first data set in the first site is isolated from an exchange with an environment and the second data set in the second site is isolated from an exchange with an environment and wherein the first site is different from the second site.

4. The method according to any one of the preceding claims, wherein each of the trained first base knowledge graph model and the trained second base knowledge graph model comprise a unique identification.

5. The method according to any preceding claims, wherein the central knowledge graph model comprises a plurality of nodes and a plurality of edges.

6. The method according to any preceding claims, wherein the first base knowledge graph model and the second base graph knowledge model comprise each at least one node and at least one edge.

7. The method according to any preceding claims, wherein the training of the first knowledge graph model and the second knowledge graph model comprises an ontology creation.

8. The method according to any preceding claims, wherein the training of the first knowledge graph model and the second knowledge graph model comprises a transformation of the first data set and the second data set.

9. The method according to any preceding claims, wherein the training of the first knowledge graph model and the second knowledge graph model comprises a schema definition.

10. The method according to any preceding claims, wherein the first data set and/or the second data set comprises one or more of the following: age, gender, disease, admission identification, reason, drug, dosage.

11. The method according to any preceding claims, wherein the first data set and/or the second data set comprises a plain text and/or a structured format and/or wherein the first data set and/or the second data set is received from an electric health record system.

12. The method according to any preceding claims, wherein the further use comprises one or more of the following: control of a medical machine, use in a diagnosis application.

13. A device comprising means for carrying out the method according to any one of the claims 1 to 12.

14. A computer program comprising instructions which, when the program is executed by a computer, cause the computer to carry out the method according to any one of the claims 1 to 12.

15. A computer readable medium comprising instructions which, when executed by a computer, cause the computer to carry out the method according to any one of the claims 1 to 12.
